(19) Europäisches Patentamt
European Patent Office
Office européen des brevets

(11) **EP 1 434 701 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(21) Anmeldenummer: **02800536.1**

(22) Anmeldetag: **18.09.2002**

(51) Int Cl.:
***B60W 10/08*** *(2006.01)*   ***B60W 20/00*** *(2006.01)*
***B60L 15/20*** *(2006.01)*

(86) Internationale Anmeldenummer:
**PCT/DE2002/003488**

(87) Internationale Veröffentlichungsnummer:
**WO 2003/031218 (17.04.2003 Gazette 2003/16)**

(54) **MIT EINER BRENNKRAFTMASCHINE GEKOPPELTE ELEKTRISCHE MASCHINE IN EINEM KRAFTFAHRZEUG**

ELECTRIC MOTOR COUPLED TO AN INTERNAL COMBUSTION ENGINE IN A MOTOR VEHICLE

MOTEUR ELECTRIQUE COUPLE A UN MOTEUR A COMBUSTION INTERNE DANS UNE AUTOMOBILE

(84) Benannte Vertragsstaaten:
**DE FR GB IT SE**

(30) Priorität: **29.09.2001 DE 10148345**

(43) Veröffentlichungstag der Anmeldung:
**07.07.2004 Patentblatt 2004/28**

(73) Patentinhaber: **ROBERT BOSCH GMBH**
**70442 Stuttgart (DE)**

(72) Erfinder:
• **HOETZER, Dieter**
**71701 Schwieberdingen (DE)**
• **EISENHARDT, Martin**
**71272 Renningen (DE)**

(56) Entgegenhaltungen:
**EP-A- 1 127 730     US-A- 5 463 294**
**US-B1- 6 234 932**

• **PATENT ABSTRACTS OF JAPAN vol. 1998, no. 04, 31. März 1998 (1998-03-31) & JP 09 322305 A (TOYOTA MOTOR CORP), 12. Dezember 1997 (1997-12-12)**

**Beschreibung**

STAND DER TECHNIK

In heutigen Kraftfahrzeugen ist die antreibende Brennkraftmaschine üblicherweise mit einem Startermotor versehen und treibt darüber hinaus über eine Riemenscheibe einen Generator an. In künftigen Fahrzeugkonzepten werden vermehrt leistungsstarke elektrische Maschinen verbaut, die sowohl den bisherigen Generator, wie auch den konventionellen Startermotor ersetzen. Wenn diese elektrischen Maschinen neben dem Verbrennungsmotor auch noch zum Antrieb des Kraftfahrzeugs beitragen, wird in der Regel von Hybridfahrzeugen gesprochen. Bekannt sind unter den Hybridfahrzeugen beispielsweise Parallelhybride, bei denen zusätzlich zum Verbrennungsmotor eine oder mehrere elektrische Maschinen im Antriebsstrang integriert sind. Auch leistungsverzweigende Hybridkonzepte sind bekannt, bei denen zwei elektrische Maschinen so angebracht sind, dass die vom Verbrennungsmotor ausgehende mechanische Leistung sowohl direkt als auch indirekt über die beiden elektrischen Maschinen zur Antriebsleistung an den Rädern beiträgt.

Derartige elektrische Maschinen könnten prinzipbedingt in unterschiedlichen Betriebarten und Betriebszuständen betrieben werden, beispielsweise im dynamischoptimalen Betriebszustand oder im wirkungsgradoptimalen Betriebszustand. Der dynamischoptimale Betriebszustand zeichnet sich dadurch aus, dass ein Momentenaufbau bei einer entsprechenden Anforderung sehr schnell erfolgen kann, beispielsweise mit einer Zeitkonstante von 5-10 ms. Nachteilig am dynamischoptimalen Betriebszustand ist der schlechte Wirkungsgrad, da hierbei die flussbildende Stromkomponente gewöhnlich auf ihrem Nennwert konstant gehalten wird, also unabhängig von einer Drehmomentanforderung. Beim wirkungsgradoptimalen Betriebszustand liegt ein günstiger Wirkungsgrad vor, dagegen ist mit um ca. den Faktor 10 längeren Momenteneinstellzeiten zu rechnen.

Aus der EP 1127730 A1 ist ein dem Oberbegriff des Anspruchs 1 entsprechender Hybridantrieb bekannt, bei dem eine Steuervorrichtung unterschiedliche Betriebszustände (Stadtfahrt, Überlandfahrt, ...) der elektrischen Maschine ansteuern und vorgeben kann. Die Betriebszustände definieren jeweils, welches Drehmoment die elektrische Maschine bei einer bestimmten Drehzahl zusammen mit der Brennkraftmaschine für den Antrieb des Fahrzeuges abgeben soll. Es ist auch vorgesehen, mittels eines manuellen Schalters einen Betriebszustand anzusteuern, bei dem die elektrische Maschine ein besonders hohes Drehmoment abgibt.

Aus der US 5463294 A ist die Steuerung einer elektrischen Maschine zum Antrieb eines Elektrofahrzeuges bekannt, wobei die elektrische Maschine für den Einsatz in unterschiedlichen Betriebsmodi unterschiedlich angesteuert wird. Als Betriebsmodi werden beispielsweise genannt: Neutraler Modus, Antriebsmodus, Lademodus.

Aus der US 6 234 932 B1 ist ein Hybridfahrzeug mit einer Steuereinrichtung bekannt. In Abhängigkeit beispielsweise der Drosselklappenöffnung und deren Verlauf werden verschiedene Betriebsmodi (z.B. Beschleunigungsmodus, "Cruising"-Modus,.. ) des Fahrzeuges erkannt und die Steuerung der elektrischen Maschine als Motor oder Generator entsprechend angepasst.

Aus der Zusammenfassung der JP 09 322 305 A ist eine Steuerung eines Hybridfahrzeuges bekannt. Die Leistungsabgabe der elektrischen Maschine wird in Abhängigkeit eines Betriebsmodus des Fahrzeugs vorgegeben.

VORTEILE DER ERFINDUNG

Die erfindungsgemäße Anordnung mit den Merkmalen des Anspruchs 1 hat den Vorteil, dass die elektrische Maschine oder die elektrischen Maschinen im Normalfall im wirkungsgradoptimalen Betrieb bei günstigem Wirkungsgrad betrieben werden. Erst wenn eine schnelle Momenteneinstellung durch entsprechende Vorgänge im Kraftfahrzeug erforderlich werden, erfolgt eine automatische Umschaltung in den dynamischoptimalen Betriebszustand, so dass bei Bedarf eine schnelle Momenteinstellung oder schneller Momentenaufbau gewährleistet ist. Da diese Vorgänge insgesamt zeitlich nur einen kleinen Bruchteil einnehmen, arbeitet hier wenigstens eine elektrische Maschine insgesamt mit gutem Wirkungsgrad. Die Umschaltung erfolgt dabei so rechtzeitig, dass sie abgeschlossen ist, wenn die schnelle Momenteinstellung tatsächlich gefordert wird.

Durch die in den Unteransprüchen angegebenen Merkmale sind vorteilhafte Weiterbildungen und Verbesserungen der im Anspruch 1 angegebenen Anordnung möglich.

Die Umschaltung vorgebende Steuersignale vor Getriebeschaltvorgängen und/oder Anlassvorgängen der Brennkraftmaschine und/oder Beschleunigungsvorgänge der Brennkraftmaschine sind vorzugsweise einem Umschalt-Steuereingang der Umschaltmittel zuführbar. Dieser Umschalt-Steuereingang kann selbstverständlich beispielsweise auch als Busanschluss ausgebildet sein. Eine zentrale Fahrzeugsteuerung und/oder eine Getriebesteuervorrichtung und/oder eine vor dem Anlassvorgang oder Beschleunigungsvorgang betätigbare Schalteinrichtung ist dabei zweckmäßigerweise zur Bildung der die Umschaltung vorgebenden Steuersignale ausgebildet.

In vorteilhafter Weise sind auch Mittel zur Umschaltung auf den dynamischoptimalen Betriebszustand für eine vorgebbare Zeit oder bis zum Abschluss des jeweiligen Betriebsvorgangs, der eine schnelle Momenteneinstellung erfordert, vorgesehen.

Um die jeweiligen Betriebszustände einstellen zu können, ist die Steuereinrichtung zur Vorgabe des flussbildenden Stroms und dem momentenbildenden Stroms für die elektrische Maschine ausgebildet. Hierzu besitzt die Steuereinrichtung Mittel zur Vorgabe eines Wertepaars für den flussbildenden und den momentenbildenden Strom in Abhängigkeit der jeweiligen Drehmomentanforderung im wirkungsoptimalen Betriebszustand und zur Vorgabe des Nennwerts für den flussbildenden Strom und eines in Abhängigkeit der jeweiligen Drehmomentanforderung stehenden momentenbildenden Stroms im dynamischoptimalen Betriebszustand.

Die elektrische Maschine ist in einer vorteilhaften Ausgestaltung zwischen die Brennkraftmaschine und einem automatischen Fahrzeuggetriebe geschaltet, wobei wenigstens zwischen der elektrischen Maschine und der Brennkraftmaschine eine Kupplung vorgesehen ist. Auf diese Weise kann die elektrische Maschine die Schaltvorgänge wirksam unterstützen und schneller machen.

Die elektrische Maschine bildet auch in vorteilhafter Weise einen Generator oder einen Motor, je nach dem jeweiligen Erfordernis oder Betriebszustand.

ZEICHNUNG

Ausführungsbeispiele der Erfindung sind in den der Zeichnung dargestellt und in der nachfolgenden Beschreibung näher erläutert. Es zeigen:

Figur 1    eine schematische Darstellung der Mittel zur Ansteuerung der elektrischen Maschine,

Figur 2    ein Ausführungsbeispiel einer zwischen eine Brennkraftmaschine und ein automatisches Getriebe geschalteten elektrischen Maschine und

Figur 3    ein Signaldiagramm zur Erläuterung eines durch die elektrische Maschine unterstützten Schaltvorgangs des automatischen Schaltgetriebes.

BESCHREIBUNG DER AUSFÜHRUNGSBEISPIELE

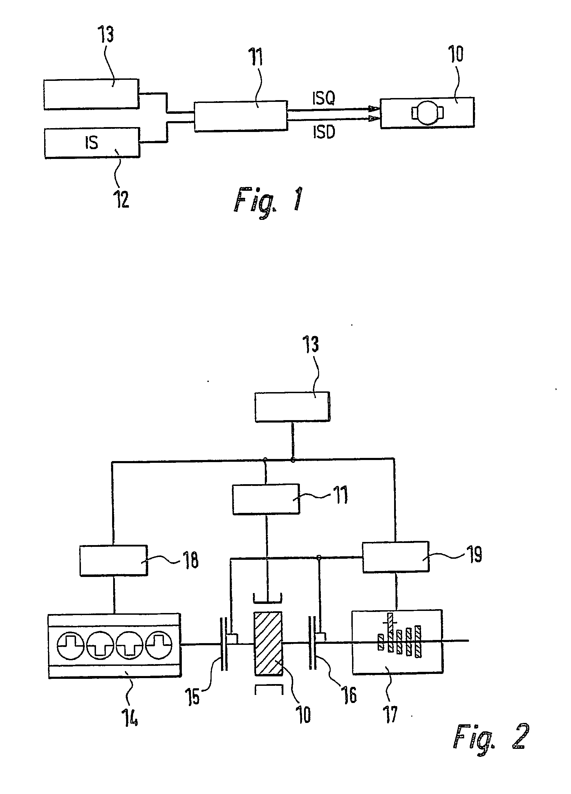

Das schematische Blockschaltbild gemäß Figur 1 soll zur Erläuterung des dynamischoptimalen Betriebszustands und des wirkungsgradoptimalen Betriebszustands einer elektrischen Maschine 10 dienen. Diese ist mit einer elektronischen Steuereinheit 11 verbunden, die wiederum über Leistungskabel an eine Stromquelle bzw. -senke 12 angeschlossen ist. Weiterhin ist die elektronische Steuereinheit 11 mit einer zentralen Fahrzeugsteuerung 13 verbunden, beispielsweise über einen CAN-Bus. Durch die elektronische Steuereinheit 11 wird den momentenbildende Strom ISQ und der flussbildende Strom ISD für die elektrische Maschine 10 vorgegeben. Der Magnetisierungsstrom Iμ für die elektrische Maschine 10 ist dabei der um die Rotorzeitkonstante (ca. 100 bis 150 ms) verzögerte flussbildende Strom ISD. Die Drehmomentgleichung einer beispielsweise als elektrische Maschine 10 eingesetzten Asynchronmaschine lautet:

$$M = K \times ISQ \times I\mu.$$

Im dynamischoptimalen Betriebszustand wird der flussbildende Strom ISD und damit Iμ auf seinen Nennwert festgelegt und konstant unabhängig von einer Drehmomentanforderung gehalten. Momentenänderungen erfolgen über eine Veränderung des momentenbildenden Stroms ISQ. Dies geht sehr schnell, und es können Zeitkonstanten erzielt werden, die ca. um den Faktor 10 kleiner als die Rotorzeitkonstante ist.

Im wirkungsgradoptimalen Betriebszustand ist dagegen mit einer längeren Momenteneinstellzeit bzw. Zeitkonstante zu rechnen, die ungefähr der Rotorzeitkonstante entspricht. Hier wird für jede Drehmomentanforderung ein Wertepaar ISD und ISQ vorgegeben, das für das gewünschte Moment den besten Wirkungsgrad ergibt. Dies kann beispielsweise über ein Kennfeld oder durch Berechnung anhand von entsprechenden Rechenvorschriften erfolgen. Im Vergleich zum dynamischoptimalen Betriebszustand ist der Gesamtwirkungsgrad insbesondere im Teillastbetrieb der elektrischen Maschine deutlich besser.

Gemäß Figur 1 wird beispielsweise durch die zentrale Fahrzeugsteuerung 13 vorgegeben, ob die elektrische Maschine 10 im dynamischoptimalen oder wirkungsgradoptimalen Betrieb arbeiten soll. Der entsprechende Steuerbefehl kann einem Umschalt-Steuereingang der elektrischen Steuereinheit 10 zugeführt werden oder einer entsprechenden Busschnittstelle.

Die elektrische Maschine 10 kann direkt oder über eine Kupplung mit der Brennkraftmaschine eines Kraftfahrzeugs verbunden sein und dient dabei sowohl als Startermotor, wie auch als Stromgenerator. Die entsprechende Umschaltung vom Motorbetrieb in den Generatorbetrieb kann ebenfalls durch die elektronische Steuereinheit 11 erfolgen. Die Kupplung kann beispielsweise nach dem Startvorgang ausgerückt werden, es sei denn, die elektrische Maschine 11 soll in bestimmten Fällen, beispielsweise bei Beschleunigungen, zum Antrieb beitragen.

Anstelle einer einzigen elektrischen Maschine 10 können selbstverständlich auch mehrere elektrische Maschinen mit der Brennkraftmaschine verbunden sein.

Die elektrische Maschine 10 wird in der Regel wirkungsgradoptimal betrieben, um einen möglichst geringen Verbrauch an Kraftstoff bzw. einen möglichst hohen Wirkungsgrad zu erreichen. Allerdings gibt es Fahrzeugzustände, bei denen eine schnelle Momenteneinstellung von großem Vorteil ist. Ein Beispiel hierfür ist der Anlassvorgang für die Brennkraftmaschine. Dabei wird die elektrische Maschine 10 schon vor der Aktivierung des Anlassvorgangs in den dynamischoptimalen Betriebszustand versetzt. Diese Umschaltung kann beispielsweise durch Betätigung des Zündschlüssels oder schon beim Öffnen der Fahrzeugtür durch den Türschalter erfolgen. Nach erfolgtem und erfolgreichem Anlassvorgang wird dann wieder eine Umschaltung in den wirkungsgradoptimalen Betriebszustand durchgeführt. Dies kann entweder drehzahlabhängig oder zeitgesteuert erfolgen.

Ein weiteres Beispiel, bei dem die Umschaltung in den dynamischoptimalen Betriebszustand von vorteil ist, wird im folgenden anhand von Figur 2 erläutert. Gemäß Figur 2 ist eine Brennkraftmaschine 14 über eine erste Kupplung 15 mit der elektrischen Maschine 10 verbunden, die weiterhin über eine zweite Kupplung 16 mit einem automatischen oder automatisierten Schaltgetriebe 17 verbunden ist. Eine derartige Anordnung wird als Parallelhybrid-Anordnung bezeichnet, wobei die zweite Kupplung 16 in einer einfacheren Ausführung auch entfallen kann. Die Brennkraftmaschine 14 wird durch ein Motorsteuergerät 18, die elektrische Maschine 10 durch die elektrische Steuereinheit 11 und das Schaltgetriebe 17 durch eine Getriebesteuergerät 19 gesteuert. Die zentrale Fahrzeugsteuerung 13 koordiniert dabei die Funktionen des Motorsteuergeräts 18, der elektronischen Steuereinheit 11 und des Getriebesteuergeräts 19. Das Getriebesteuergerät 19 dient zusätzlich zur Betätigung der Kupplungen 15, 16.

Während eines Schaltvorgangs des Schaltgetriebes 17 kann bzw. bei fehlender zweiter Kupplung 16 muss die elektrische Maschine 10 durch die im Verhältnis zur Getriebeeingangswelle großen Trägheit zur aktiven Synchronisation beitragen. Damit der Schaltvorgang möglichst schnell abläuft und damit die Zugkraftunterbrechung möglichst kurz gehalten wird, sollte sich die elektrische Maschine 10 vor dem Schaltvorgang schon im dynamischoptimalen Betrieb befinden. Eine schnelle Momenteneinstellung während der aktiven Synchronisation gewährleistet zudem ein besseres Regelverhalten, insbesondere auch dann, wenn die elektrische Maschine 10 oder eine zusätzliche weitere elektrische Maschine drehzahlgeregelt betrieben wird.

Nachdem der Fahrer bei einem automatisierten Schaltgetriebe 17 bzw. die Schaltelektronik bei einem vollautomatischen Getriebe die Schaltung einleitet, wird durch ein entsprechendes Signal am Umschalteingang der elektronischen Steuereinheit 11 die Umschaltung in den dynamischoptimalen Betrieb gebracht. Gleichzeitig erfolgt die aktive Synchronisation.

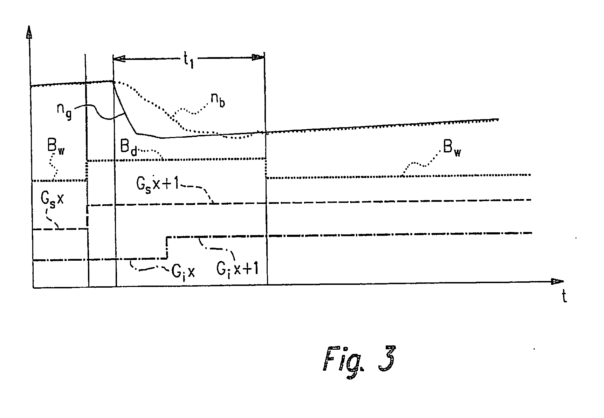

Die Figur 3 zeigt die Vorgänge während des Schaltvorgangs, bei einem automatisch eingeleiteten Schaltvorgang. Der Schaltbefehl, durch den der Sollwert für den augenblicklich vorliegenden Gang $G_5x$ durch den Sollwert für den nächsthöheren Gang $G_sx + 1$ ersetzt wird (das Ausführungsbeispiel zeigt einen Hochschaltvorgang), wird gleichzeitig zur Umschaltung vom wirkungsgradoptimalen Betriebszustand Bw in den dynamischoptimalen Betriebszustand Bd verwendet. Erst danach wird der Schaltvorgang eingeleitet. Durch das schnelle Ansprechverhalten der elektrischen Maschine 10 kann die Zeit für die aktive Synchronisation klein gehalten werden. Außerdem ist mit einer schnellen Einregelung von Sollwerten zu rechnen, was bei einer eventuellen Synchronisation ohne Synchronringe im Getriebe von Vorteil ist. Nachdem sich die Getriebeeingangsdrehzahl $n_g$ an die Drehzahl der Brennkraftmaschine $n_b$ mit Unterstützung der elektrischen Maschine 10 angenähert bzw. angeglichen hat erfolgt der eigentliche Schaltvorgang, bei dem der Ist-Wert der Getriebeschaltstufe $G_ix$ in den neuen Ist-Wert der nächsthöheren Getriebestufe $G_ix + 1$ wechselt. Nach Abschluss des Schaltvorgangs, der die Zeit t1 beansprucht, erfolgt eine Rückumschaltung des Betriebszustands der elektrischen Maschine vom dynamischoptimalen Betriebszustand Bd in den wirkungsgradoptimalen Betriebszustand Bw.

Das Umschaltverfahren der Betriebszustände bei Schaltvorgängen kann entsprechend beispielsweise auch bei Dual-E-Getrieben eingesetzt werden.

**Patentansprüche**

1. Elektrische Maschine (10) mit einer Steuereinrichtung (11), wobei die elektrische Maschine (10) mit einer Brennkraftmaschine (14) eines Kraftfahrzeuges gekoppelt ist, wobei die Steuereinrichung (11) zur Vorgabe eines wirkungsgradoptimalen Betriebszustands (Bw) und eines dynamisch optimalen Betriebszustands (Bd) für die elektrische Maschine (10) vorgesehen ist, und wobei Umschaltmittel zur Umschaltung vom gewöhnlich vorgegebenen wirkungsgradoptimalen Betriebszustand (Bw) in den dynamisch optimalen Betriebszustand (Bd) vorgesehen sind, **dadurch gekennzeichnet, dass** die Umschaltung vor der Aktivierung von Betriebsvorgängen im Kraftfahrzeug erfolgt, die eine schnelle Momenteinstellung erfordern, wobei die Umschaltung vorgebende Steuersignale vor Getriebeschaltvorgängen und/oder Anlassvorgängen der Brennkraftmaschine, die zeitlich nur einen kleinen Bruchteil einnehmen, einem Umschalt-Steuereingang der Umschaltmittel zugeführt werden , so dass erst wenn eine schnelle Momenteneinstellung durch die entsprechenden Vorgänge notwendig wird, die Umschaltung automatisch so rechtzeitig erfolgt, dass sie abgeschlossen ist, wenn die schnelle Momenteneinstellung tatsächlich gefordert wird.

2. Elektrische Maschine nach Anspruch 1, **dadurch gekennzeichnet, dass** die Umschaltung vorgebende Steuersignale vor Beschleunigungsvorgängen der Brennkraftmaschine einem Umschalt-Steuereingang der Umschaltmittel zuführbar sind.

3. Elektrische Maschine nach Anspruch 2, **dadurch gekennzeichnet, dass** eine zentrale Fahrzeugsteuerung (13) und/oder eine Getriebesteuervorrichtung (19) und/oder eine vor dem Anlassvorgang oder Beschleunigungsvorgang betätigbare Schalteinrichtung zur Bildung der die Umschaltung vorgebende Steuersignale ausgebildet ist.

4. Elektrische Maschine nach einem der vorhergehenden Ansprüche, **dadurch gekennzeichnet, dass** Mittel zur Umschaltung auf den dynamischoptimalen Betriebszustand (Bd) für eine vorgebbare Zeit oder bis zum Abschluss des jeweiligen Betriebsvorgangs, der eine schnelle Momenteneinstellung erfordert, vorgesehen sind.

5. Elektrische Maschine nach einem der vorhergehenden Ansprüche, **dadurch gekennzeichnet, dass** die Steuereinrichtung (11) zur Vorgabe des flussbildenden Stroms (ISD) und des momentenbildenden Stroms (ISQ) für die elektrische Maschine (10) ausgebildet ist.

6. Elektrische Maschine nach Anspruch 5, **dadurch gekennzeichnet, dass** die Steuereinrichtung (11) Mittel zur Vorgabe eines Wertepaars für den flussbildenden (ISD) und den momentenbildenden Strom (ISQ) in Abhängigkeit der jeweiligen Drehmomentanforderung im wirkungsgradoptimalen Betriebszustand (Bw) und zur Vorgabe des Nennwerts für den flussbildenden Strom (ISD) und eines in Abhängigkeit der jeweiligen Drehmomentanforderung bestehenden momentenbildenden Stroms (ISQ) im dynamischoptimalen Betriebszustand ($B_d$) aufweisen.

7. Elektrische Maschine nach einem der vorhergehenden Ansprüche, **dadurch gekennzeichnet, dass** die elektrische Maschine (10) zwischen die Brennkraftmaschine (14) und ein automatisches oder automatisiertes Fahrzeuggetriebe (17) geschaltet ist, wobei wenigstens zwischen der elektrischen Maschine (10) und der Brennkraftmaschine (14) eine Kupplung (15) vorgesehen ist.

8. Elektrische Maschine nach einem der vorhergehenden Ansprüche, **dadurch gekennzeichnet, dass** die elektrische Maschine (10) wahlweise einen Generator oder eine Motor bildet.

**Claims**

1. Electrical machine (10) having a control device (11), with the electrical machine (10) being coupled to an internal combustion engine (14) of a motor vehicle, with the control device (11) being provided for prespecifying for the electrical machine (10) an operating state (Bw) which is optimum in terms of efficiency and an operating state (Bd) which is optimum in terms of dynamics, and with switchover means being provided for switching over from the usually prespecified operating state (Bw) which is optimum in terms of efficiency to the operating state (Bd) which is optimum in terms of dynamics, **characterized in that** the switchover is made before operating processes which require rapid torque adjustment are activated in the motor vehicle, with control signals which prespecify the switchover being supplied to a switchover control input of the switchover means before gear shifting processes and/or starting processes of the internal combustion engine which take up only a small fraction of time, so that, only if a rapid torque adjustment is required by the corresponding processes, the switchover is automatically made at a time such that it is concluded when the rapid torque adjustment is actually required.

2. Electrical machine according to Claim 1, **characterized in that** control signals which prespecify the switchover can be supplied to a switchover control input of the switchover means before acceleration processes of the internal combustion engine.

3. Electrical machine according to Claim 2, **characterized in that** a central vehicle control system (13) and/or a transmission control apparatus (19) and/or a shifting device which can be operated before the starting process or acceleration process are/is designed to form the control signals which prespecify the switchover.

4. Electrical machine according to one of the preceding claims, **characterized in that** means for switching over to the operating state (Bd) which is optimum in terms of dynamics are provided for a prespecifiable time or until the respective operating process which requires rapid torque adjustment is concluded.

5. Electrical machine according to one of the preceding claims, **characterized in that** the control device (11) is designed to prespecify the flux-forming current (ISD) and the torque-forming current (ISQ) for the electrical machine (10).

6. Electrical machine according to Claim 5, **characterized in that** the control device (11) has means for prespecifying a pair of values for the flux-forming current (ISD) and the torque-forming current (ISQ) as a function of the respective torque requirement in the operating state (Bw) which is optimum in terms of efficiency and for prespecifying the nominal value for the flux-forming current (ISD) and a torque-forming current (ISQ), which is produced as a function of the respective torque requirement, in the operating state (Bd) which is optimum in terms of dynamics.

7. Electrical machine according to one of the preceding claims, **characterized in that** the electrical machine (10) is connected between the internal combustion engine (14) and an automatic or automated vehicle transmission (17), with a clutch (15) being provided at least between the electrical machine (10) and the internal combustion engine (14).

8. Electrical machine according to one of the preceding claims, **characterized in that** the electrical machine (10) selectively forms a generator or a motor.

**Revendications**

1. Moteur électrique (10) équipé d'un dispositif de commande (11), le moteur électrique (10) étant couplé à un moteur à combustion interne (14) d'un véhicule automobile, le dispositif de commande (11) étant conçu pour prédéfinir un état de fonctionnement optimal sur le plan du degré d'efficacité (Bw) et un état de fonctionnement optimal sur le plan dynamique (Bd) du moteur électrique (10) et des moyens de commutation étant prévus pour commuter de l'état de fonctionnement optimal sur le plan du degré d'efficacité (Bw) prédéfini de façon habituelle à l'état de fonctionnement optimal sur le plan dynamique (Bd), **caractérisé en ce que** la commutation se produit avant l'activation des processus de fonctionnement nécessitant, dans le véhicule automobile, un réglage rapide du couple, les signaux de commande prédéfinissant la commutation étant amenés à une entrée de commande de commutation des moyens de commutation avant les processus de changement de vitesse et/ou les processus de démarrage du moteur à combustion interne n'occupant qu'une petite portion de temps, de sorte que ce n'est que pour les besoins de réglage rapide du couple pour les processus correspondants que la commutation se produit automatiquement suffisamment tôt pour que la commutation soit achevée au moment où le réglage rapide du couple est effectivement demandé.

2. Moteur électrique selon la revendication 1, **caractérisé en ce que** les signaux de commande prédéfinissant la commutation peuvent être amenés à une entrée de commande de commutation des moyens de commutation avant les processus d'accélération du moteur à combustion interne.

3. Moteur électrique selon la revendication 2, **caractérisé en ce qu'**une commande centrale de véhicule (13) et/ou un dispositif de commande de boîte de vitesses (19) et/ou un dispositif de changement de vitesse actionnable avant le processus de démarrage ou le processus d'accélération sont prévus pour émettre les signaux de commande définissant la commutation.

4. Moteur électrique selon l'une quelconque des revendications précédentes, **caractérisé en ce que** des moyens de commutation vers l'état de fonctionnement optimal sur le plan dynamique (Bd) sont prévus pendant une durée prédéfinissable ou jusqu'à la fin du processus de fonctionnement respectif nécessitant un réglage rapide du couple.

5. Moteur électrique selon l'une quelconque des revendications précédentes, **caractérisé en ce que** le dispositif de commande (11) est réalisé pour prédéfinir le courant constitutif du débit (ISD) et le courant constitutif du couple (ISQ) du moteur électrique (10).

6. Moteur électrique selon la revendication 5, **caractérisé en ce que** le dispositif de commande (11) comprend des moyens de prédéfinition d'un couple de valeurs pour le courant constitutif du débit (ISD) et le courant constitutif du couple (ISQ) en fonction de la demande de couple de rotation respective dans l'état de fonctionnement optimal sur le plan du degré d'efficacité (Bw) et de prédéfinition de la valeur nominale du courant constitutif du débit (ISD) et d'un courant constitutif du couple (ISQ) existant en fonction de la demande de couple de rotation respective dans l'état de fonctionnement optimal sur le plan dynamique (Bd).

7. Moteur électrique selon l'une quelconque des revendications précédentes, **caractérisé en ce que** le moteur électrique (10) est commuté entre le moteur à combustion interne (14) et une boîte de vitesses de véhicule (17) automatique ou automatisée, au moins un embrayage (15) étant prévu entre le moteur électrique (10) et le moteur à combustion interne (14).

8. Moteur électrique selon l'une quelconque des revendications précédentes, **caractérisé en ce que** le moteur électrique (10) prend au choix la forme d'un générateur ou d'un moteur.

13

11

10

ISQ

ISD

IS

12

*Fig. 1*

13

11

18

19

15

10

16

17

14

*Fig. 2*

*Fig. 3*

**EP 1 434 701 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1127730 A1
- US 5463294 A
- US 6234932 B1
- JP 09322305 A